# EUROPÄISCHE PATENTSCHRIFT

(11) **EP 0 915 262 B1**
(45) Veröffentlichungstag und Bekanntmachung des Hinweises auf die Patenterteilung: **20.12.2000**
(21) Anmeldenummer: 98117247.1
(22) Anmeldetag: 11.09.1998
(51) Int. Cl.: F16B 37/12

(54) **Gewindeeinsatz**
Threaded insert
Douille filetée

(30) Priorität: 08.11.1997 DE 29719892 U
(43) Veröffentlichungstag der Anmeldung: 12.05.1999
(73) Patentinhaber: Kerb-Konus-Vertriebs-GmbH, 92224 Amberg (DE)
(72) Erfinder: Hausmann, Johann, 92253 Schnaittenbach (DE)
(74) Vertreter: Charrier, Rolf, Dipl.-Ing.

(56) Entgegenhaltungen:
- EP-A- 0 165 873
- BE-A- 565 394
- DE-A- 2 630 343
- DE-U- 29 719 892
- GB-A- 1 482 624
- US-A- 3 430 531
- US-A- 5 681 135

## Beschreibung

Die Erfindung betrifft einen Gewindeeinsatz nach dem Oberbegriff des Anspruches 1.

Gewindeeinsätze der bekannten Art weisen ein Außengewinde auf, das, wenn der Gewindeeinsatz in eine Aufnahmebohrung eingeschraubt wird, in dieser Aufnahmebohrung ein Innengewinde erzeugt. Es handelt sich hierbei um sogenannte selbstschneidende Gewindeeinsätze. Die Gewindeschneidkanten am Einsatzende werden hierbei gebildet durch zwei einander gegenüberliegende Schlitze oder durch drei gleichmäßig über den Umfang verteilte Bohrungen.

Vor dem Eindrehen des Gewindeeinsatzes in die Aufnahmebohrung wird der Gewindeeinsatz auf einen Gewindestift eines Eindrehwerkzeugs aufgefädelt, der sodann nach dem Ansetzen des Gewindeinsatzes an die Aufnahmebohrung in Drehung versetzt wird, wobei sich der Gewindestift in das Innengewinde einschraubt. Ist dies erfolgt, wird sodann der Gewindeeinsatz in die Aufnahmebohrung eingedreht, wobei das Innengewinde in der Aufnahmebohrung erzeugt wird. Nach erfolgtem Einschrauben wird der Gewindestift in Gegenrichtung gedreht, wobei er aus dem Innengewinde ausgeschraubt wird. Dieses Vorgehen ist zeitaufwendig.

Bei den bekannten Gewindeeinsätzen sind zur Durchführung dieser Einsatzmethode Innen- und Außengewinde gleichsinnig drehend, das heißt als Links- oder Rechtsgewinde, ausgebildet. Dies führt zu dem weiteren Nachteil, daß beim Versuch eine festsitzende Schraube aus dem Innengewinde herauszuschrauben, der Gewindeeinsatz aus der Aufnahmebohrung ausgeschraubt wird.

Die DE 92 16 227 U1 zeigt einen Gewindeinsatz mit Außengewinde, jedoch ohne Innengewinde. Kopfseitig weist die Innenbohrung einen Innenachtkant für den Eingriff eines Montagewerkzeugs auf.

Um das Ansetzen des Gewindeeinsatzes an der Gewindebohrung zu erleichtern, wird in der DE 20 19 837 A1 vorgeschlagen, am Einsatzende vor dem Schneidgewinde eine ringförmige Führung vorzusehen, deren Durchmesser geringfügig kleiner ist als derjenige der Aufnahmebohrung. Das Innengewinde schneidende in Längsrichtung sich erstreckende Ausnehmungen dienen der Aufnahme eines Eindrehwerkzeugs.

Der BE 565 394 A ist ein selbstschneidender Gewindeeinsatz der oben genannten Art entnehmbar, bei welchem zum Einsetzen eines Eindrehwerkzeugs sechs axial verlaufende Rillen am Innengewinde gleichmäßig über dessen Umfang verteilt angebracht sind, welche die Gewindespitzen des Innengewindes schneiden. Die Rillen verlaufen im Abstand zum Gewindegrund des Innengewindes. Bei den Abschnitten zwischen den Rillen bleibt die volle Form des Innengewindes erhalten.

Es besteht die Aufgabe, den Gewindeeinsatz so auszubilden, daß er in zeitsparender Weise in die Aufnahmebohrung selbstschneidend eingeschraubt werden kann.

Gelöst wird diese Aufgabe mit den Merkmalen des Anspruches 1. Vorteilhafte Ausgestaltungen sind den Unteransprüchen entnehmbar.

Ein Ausführungsbeispiel wird nachfolgend anhand der Zeichnung näher erläutert. Es zeigen:
**Fig. 1** einen Längsschnitt durch einen Gewindeeinsatz und
**Fig. 2** eine Draufsicht auf diesen Gewindeeinsatz.

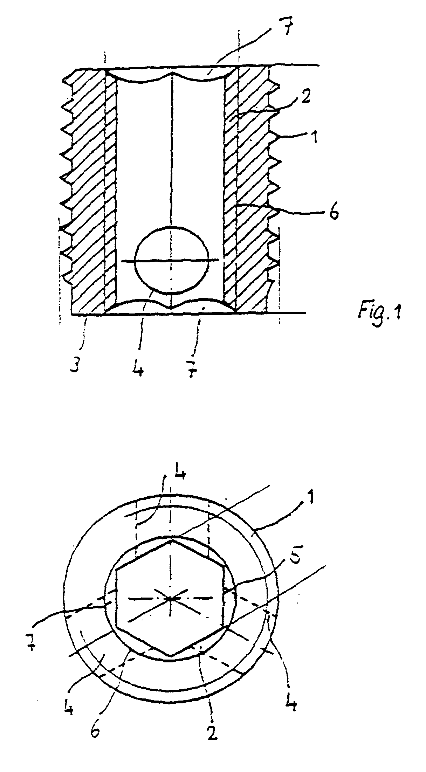

Der Gewindeeinsatz weist ein Außengewinde 1 und ein Innengewinde 2 auf. Im Bereich des Einsatzendes 3 ist das Außengewinde konisch angefast. In diesem angefasten Bereich sind drei radial nach innen verlaufende Bohrungen 4 vorgesehen, welche mit dem Außengewinde 1 Gewindeschneidkanten bilden, die beim Eindrehen des Gewindeeinsatzes in eine Aufnahmebohrung dort ein Innengewinde erzeugen. Das Innengewinde 2 weist einen von der Kreisform abweichenden Querschnitt auf, im vorliegenden Ausführungsbeispiel ist der Querschnitt ein Sechskant 5. Die Enden der den Sechskant bildenden Geraden verlaufen praktisch bis zum Gewindegrund 6 des Innengewindes 2. An beiden Enden des Gewindeeinsatzes ist das Innengewinde angefast. Die Anfasungen sind mit 7 bezeichnet.

Das Außengewinde 1 ist linksdrehend, während das Innengewinde 2 rechtsdrehend ist.

Zum Einsetzen des Gewindeeinsatzes in eine Aufnahmebohrung wird dieser mit seinem Innensechskant 5 auf ein Sechskantwerkzeug aufgesteckt und linksdrehend in die Aufnahmebohrung eingedreht. Hierdurch entfällt das langwierige Auffädeln des Gewindeeinsatzes auf einen Gewindestift des Eindrehwerkzeugs und dessen Ausdrehen nach Beendigung des Eindrehvorgangs. Nach Beendigung des Eindrehvorgangs wird das Sechskantwerkzeug lediglich aus dem Sechskant 5 herausgezogen. Beim Einsetzen des Gewindeeinsatzes in eine Aufnahmebohrung wird so eine Zeitersparnis von etwa 20 % erzielt. Da das Innengewinde 2 einen Sechskant 5 bildet, dessen Ecken bis zum Gewindegrund 6 verlaufen, kann vom Sechskantwerkzeug ein hohes Drehmoment auf dem Gewindeeinsatz übertragen werden, ohne daß das Innengewinde 2 beschädigt wird.

Ist eine festsitzende Schraube in das Innengewinde 2 eingeschraubt und soll diese gelöst werden, findet ein Ausdrehen des Gewindeeinsatzes aus der Aufnahmebohrung nicht statt. Durch das linksdrehende Außengewinde wird ein Ausdrehen des Gewindeeinsatzes aus der Aufnahmebohrung verhindert. Vielmehr besteht die Tendenz, daß sich der Gewindeeinsatz in die Aufnahmebohrung noch weiter einschraubt.

## Patentansprüche

1. Gewindeeinsatz mit einem Außengewinde (1), das sich am Einsatzende (3) konisch verjüngt und mit mindestens einem Einschnitt eine Gewindeschneidkante bildet, sowie mit einem Innengewinde (2), **dadurch gekennzeichnet**, daß das Innengewinde (2) einen von der Kreisform abweichenden Sechskantquerschnitt (5) aufweist, bei dem die Enden der Geraden am Gewindegrund (6) enden.

2. Gewindeeinsatz nach Anspruch 1, **dadurch gekennzeichnet,** daß Außen- und Innengewinde (1, 2) Steigungen in entgegengesetzter Richtung aufweisen.

3. Gewindeeinsatz nach Anspruch 2, **dadurch gekennzeichnet**, daß das Außengewinde (1) linksdrehend und das Innengewinde (2) rechtsdrehend ist.

4. Gewindeeinsatz nach einem der Ansprüche 1 bis 3, **dadurch gekennzeichnet,** daß das Innengewinde (2) mindestens an dem Einsatzende (3) gegenüberliegende Ende angefast ist.

5. Gewindeeinsatz nach Anspruch 4, **dadurch gekennzeichnet**, daß das Innengewinde (2) an beiden Enden angefast ist.

## Claims

1. Threaded insert with an external thread (1) which tapers conically at the end (3) of the insert and forms a thread-cutting edge with at least one insert, and with an internal thread (2), characterised in that the internal thread (2) exhibits a hexagon cross-section (S) differing from the circular shape, in which the ends of the straight lines end at the root (6) of the thread.

2. Threaded insert according to claim 1, characterised in that the external and internal threads (1, 2) exhibit pitches in the opposite direction.

3. Threaded insert according to claim 2, characterised in that the external thread (1) is a left-hand thread and the internal thread (2) is a right-hand thread.

4. Threaded insert according to one of claims 1 to 3, characterised in that the internal thread (2) is chamfered at least at the opposite end to the end (3) of the insert.

5. Threaded insert according to claim 4, characterised in that the internal thread (2) is chamfered at both ends.

## Revendications

1. Pièce rapportée filetée comportant un filetage extérieur (1), qui va en rétrécissant d'une manière conique à l'extrémité d'insertion de pièce rapportée (3) et forme, avec au moins une partie taillée, une arête de taille de filetage, ainsi qu'un filetage intérieur (2), caractérisée en ce que le filetage intérieur (2) a une section en 6 pans (5) qui s'écarte de la forme circulaire et dans laquelle les extrémités des génératrices se terminent au fond de filet (6).

2. Pièce rapportée filetée suivant la revendication 1, caractérisée en ce que le filetage extérieur et le filetage intérieur (1, 2) sont à pas de sens opposés.

3. Pièce rapportée filetée suivant la revendication 2, caractérisée en ce que le filetage est extérieur (1) est à pas à gauche et le filetage intérieur (2) à pas à droite.

4. Pièce rapportée filetée suivant l'une des revendications 1 à 3, caractérisée en ce que le filetage intérieur (2) est chanfreiné à l'extrémité opposée à l'extrémité d'insertion de pièce rapportée (3).

5. Pièce rapportée filetée suivant la revendication 4, caractérisée en ce que le filetage intérieur (2) est chanfreiné aux deux extrémités.
